# EUROPEAN PATENT SPECIFICATION

(11) **EP 2 086 129 B1**
(45) Date of publication and mention of the grant of the patent: **14.12.2011**
(21) Application number: 08300060.4
(22) Date of filing: 30.01.2008
(51) Int. Cl.: H04B 10/08

(54) **Method for pinpointing a faulty network terminal in a Passive Optical Network (PON)**
Verfahren zum Lokalisieren eines fehlerhaften Netzendgeräts in einem passiven optischen Netz (PON)
Procédé pour identifier un terminal de réseau défectueux dans un réseau optique passif (PON)

(43) Date of publication of application: 05.08.2009
(73) Proprietor: MITSUBISHI ELECTRIC R&D CENTRE EUROPE B.V., 1119 NS Schiphol-Rijk (NL); MITSUBISHI ELECTRIC CORPORATION, Chiyoda-ku Tokyo 100-8310 (JP)
(72) Inventor: Lavillonniere, Eric, 35530, Noyal sur Vilaine (FR); Pautonnier-Perrot, Sophie, 35580, COVEN (FR); Morel, Pierre, 35140, St. Ouen les Alleux (FR); Coudreuse, Jean-Pierre, 22300, Lannion (FR)
(74) Representative: Blot, Philippe Robert Emile

(56) References cited:
- GB-A- 2 330 280
- US-A1- 2004 017 965
- US-A1- 2004 096 216
- US-A1- 2004 156 635
- US-A1- 2006 013 582

## Description

The present invention relates to a method for pinpointing a faulty network terminal in a Passive Optical Network (PON) and a Passive Optical Network (PON) wherein the method is implemented.

Passive Optical Networks are well known as being one among the two architectures of the access part of optical networks.

According to the Passive Optical Network (PON) architecture, also called Point to Multipoint architecture, a conventional Passive Optical Network (PON) comprises an Optical Line Termination (OLT) upwardly connected to a switch belonging to a high rate optical networking infrastructure and a set of optical splitters wherein each optical splitter is upwardly connected to the Optical Line Termination (OLT) through a different respective dedicated fibre.

The Passive Optical Network also comprises several network terminals, located inside the customer premises also called Optical Network Terminals (ONTs) grouped within clusters.

The network terminals of each cluster share the same optical fibre from the Optical Line termination to the splitter respectively associated to the corresponding cluster.

The network terminals of each cluster are connected to the corresponding optical splitter through different respective dedicated fibres.

In the Passive Optical Network architecture, since only one fibre is shared by the network terminals of one cluster both for uplink (from the network terminals of the cluster to OLT) and downlink (from OLT to network terminals of the cluster), uplink and downlink data are transmitted simultaneously using two distinct wavelengths of the laser. Such a downlink/uplink access scheme is referred as wavelength duplex access.

In the uplink direction, a time slot is allocated repeatedly to each user of a cluster, wherein transmission of data is enabled.

Time slots are configured into a frame in such a way to avoid simultaneous transmission which could collide. Such an uplink access scheme from the network terminals to the OLT is conventionally called a Time Division Multiplexing Access (TDMA).

When intentionally or unintentionally the network terminal is not transmitting its data in the allocated time slot but is transmitting data in other times slots allocated to some other network terminals, there is collision between the data of the faulty network terminal and the data sent by the other network terminals.

Insofar, a well known way to diagnose the fault and in particular to identify and locate, namely to pinpoint the faulty network terminal is to send a maintenance personal in the place where the splitters are grouped. By disconnecting manually, one by one, each network terminal line connection from the associated splitter and performing loopback tests with the aid of the remaining network terminals connected to the splitter, the technician is able to find and identify the faulty network terminal.

A major drawback of this method is the time and the cost required to send a technician in the splitter premises, to disconnect and reconnect the connexions of the network terminals to the splitter. This diagnosis method is particularly difficult to use when the network terminal fibre is spliced to the splitter fibre. Prior art systems are known from US 2004/0156635 and US 2004/0017965.

The aim of the invention is to provide a diagnosis method to identify and locate a faulty user in a Passive Optical Network which is simpler to carry out for maintenance and which provide time saving in the maintenance tasks.

The invention accordingly relates to Method for pinpointing a faulty network terminal in a passive optical network (PON) comprising an optical line termination, a splitter upwardly connected to the optical line termination through a single fibre and at least two network terminals, each network terminal upwardly connected to the splitter through a different dedicated fibre, the splitter acting as a adder for superposing any signals transmitted from the network terminals,
characterized in that the method comprises the following steps consisting of subsequently for each terminal connected to the same splitter :
1a.) sending a request from the optical line termination to one identified network terminal for transmitting a testing signal while the remaining network terminals are requested to be silent
1b.) attempting from the requested network terminal to transmit the testing signal, and
1c.) analysing the signal received at the optical line termination issued from the splitter in order to detect the testing signal and provide a detection result,
   and determining whether the probed identified network terminal is a faulty terminal on the basis of the detection results.

According to particular embodiments, the method for pinpointing a network terminal comprises one or more of the following characteristics:
- the determining step is carried after analysing step for each terminal, before analysing the signal received from another requested network terminal,
- the testing signal is a signal comprised in the set of the carrier wave signal and the data modulated signal,
- it comprises a first initial step of detecting the presence of a reference signal at the optical line termination when all the network terminals are requested to be silent,
- it comprises a step of measuring the average power of the received signal over a scaled level range in order to obtain a reference average received power after a successful detection of the presence of the reference signal in the step,
- in the step of analysing the signal received at the optical line termination, the analysis is carried out by measuring the average of the received power when the requested network terminal transmits the testing signal while the remaining network terminal are requested to be silent,
   the measured received power is compared to the reference average received power, and in case change of the received power is observed the testing signal is considered as being detected,
   in the step of determining, the probed network terminal is judged as a faulty terminal when the expected testing signal has not been detected,
- the testing signal is an encoded signal encoded by a pseudorandom data sequence of CDMA type operating as a signature,
- the pseudorandom data sequence encoding the testing sequence is the same for all network terminals,
- analysing is achieved by correlating the received signal at the optical line termination with the pseudorandom data sequence of the testing signal.

The invention also relates to a passive optical network (PON) comprising an optical line termination, a splitter upwardly connected the optical line termination through a single fibre and at least two network terminals, each network terminal upwardly connected to the splitter through different dedicated fibre, the splitter acting as a adder for superposing any signals transmitted from the network terminals,
characterized in that
each network terminal comprises a testing signal transmitter (35) able to generate and transmit to the optical line termination a testing signal upon receipt the request issued from the optical line termination,
the optical line termination comprises a fault diagnosis unit for sending a request to one network terminal connected to a same splitter for transmitting a testing signal while the remaining terminals connected the splitter have been requested to be silent, for analyzing the signal received at the optical line termination issued from the splitter in order to detect the testing signal when the remaining terminals have been required to be silent and provide a detection result, and for determining whether the probed network terminal is a faulty terminal on the basis of the detection result.

According to particular embodiments, the passive optical network system comprises one or more of the following characteristics:
- the testing signal is a signal comprised in the set of the carrier wave signal and the data modulated signal,
- the fault diagnosis unit comprises an average power detector and a comparator for comparing two different measured average power values,
- each testing signal transmitter comprises a pseudorandom data sequence encoder for encoding the testing signal,
- the analysis diagnosis unit comprises a correlating unit suited for detecting the pseudorandom data sequence.

The invention also relates to a fault diagnosis unit for pinpointing a faulty network terminal in a passive optical network (PON) characterized in that it comprises:
means for sending a request to the probed network terminal for transmitting a testing signal,
while the remaining terminals connected to a same splitter have been requested to be silent, and means for analyzing the signal received at an optical line termination issued from a splitter in order to detect the testing signal and provide a detection result, and
means for determining whether the probed network terminal is a faulty terminal on the basis of the detection result, and
means for managing the tasks of requesting, analyzing and determining.

According to particular embodiments, the diagnosis unit comprises one or more of the following characteristics:
- it comprises an average power detector and a comparator for comparing two different measured average power values,
- it comprises at least one correlating unit suited for detecting the pseudorandom data sequence.

A better understanding of the invention will be facilitated by reading the following description, which is given solely by way of examples and with reference to drawings, in which:
- Figure 1 is a passive optical network architecture wherein the method according the invention is implemented,
- Figure 2 is a first embodiment flow chart of the method used in the passive optical network of the Figure 1, and
- Figure 3 is Figure 2 is a second embodiment flow chart of the method used in the passive optical network of the Figure 1.

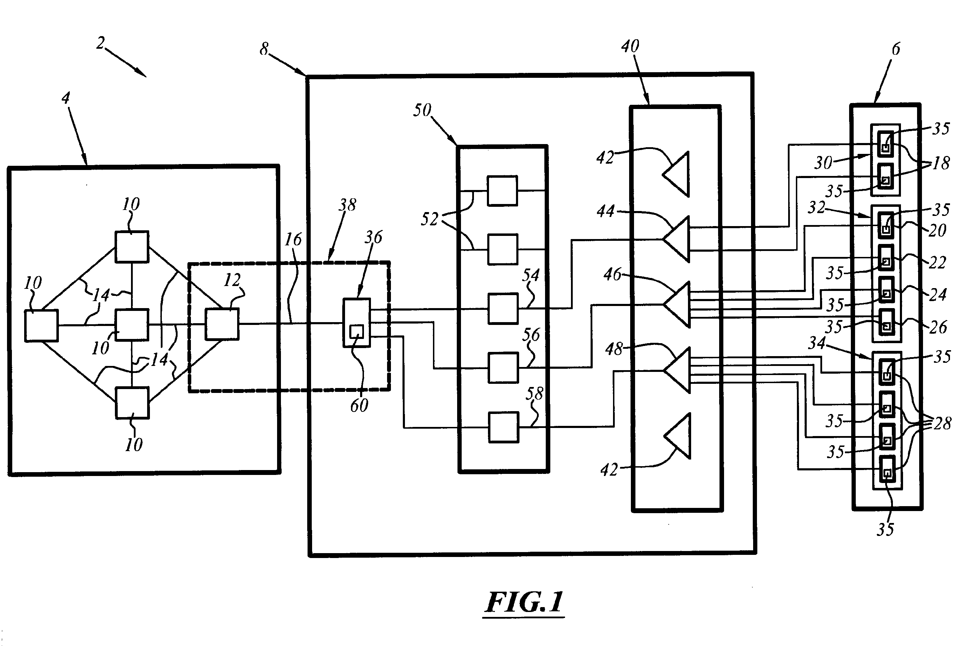

According to figure 1, an optical network 2 generally comprises a high rate data networking infrastructure part 4, a network terminal part 6 and an optical access part 8 linking the networking infrastructure 4 to the network terminal part 6.

The high rate data networking infrastructure part 4 comprises a set of high rate switches 10, 12 interconnected between each other with high rate data links 14.

The switches 10, 12 are generally also connected to one or several optical access parts. In the figure 1, only one optical access part 8 is illustrated and only one switch 12 is shown connected to the optical access part 8 through a single fibre or copper line 16.

The network terminal part 6 comprises a set of network terminals 18, 20, 22, 24, 26, 28 which are connected to the switch 12 through the optical access part 8.

The terminals are grouped within a number of clusters 30, 32, 34, here three clusters that reflect the geographical repartition of the houses or premises housing the network terminals and the integration capability of the access devices used within the optical access part 8.

In the figure 1, the two network terminals 18 are grouped within the cluster 30, the four network terminals 20, 22, 24, 26 are grouped within the cluster 32 and the four network terminals 28 are grouped within the cluster 34.

Each network terminal 18, 20, 22, 24, 26, 28 comprises a user normal data transmitter not shown and a testing signal transmitter 35 able to generate a testing signal.

The testing signal transmitter 35 and the user normal data transmitter share common hardware or software functionalities in a common part, so that a testing of at least a part of the user normal data transmitter is effective.

The testing signal transmitter 35 comprises a testing signal generator and a transmitter front end not shown that are partially or totally common to the user normal data transmitter.

Here, the testing signal transmitter front end is the same part as one forming the user data transmitter front end.

Testing signals generated by the testing signal transmitter 35 are of several types.

A first type of signal is a carrier wave signal made of a pure sinusoid.

A second type of signal is a common traffic data modulated signal.

A third type of signal is a signal of first type or second type encoded by a pseudorandom data sequence as used in CDMA (Code Division Multiplexing Access).

A fourth type of signal is a signal obtained by combining any of the first, second, third type signals.

The optical access part 8 comprises as an interface relative to the networking infrastructure part 4 an optical line termination 36 connected to the switch 12 through the fibre or copper line 16.

The optical line termination 36 and the switch 12 are forming a central office 38 also called Point of Presence.

The optical access part 8 also comprises a set 40 of splitters 42, 44, 46, 48 called flexibility point and a set 50 of feeder lines 52, 54, 56, 58.

The two splitters 42 are not used and not connected to any lines.

The three splitters 44, 46, 48 are upwardly connected to the optical line termination 36 trough respective different feeder lines 54, 56, 58.

The two feeder lines 52 are not used and not connected to any device.

The optical line termination 36 comprises a fault diagnosis unit 60 with a processor unit including counters and a memory.

The fault diagnosis unit 60 is able to manage the process of diagnosis by sending according a predetermined time sequence requests to a cluster of network terminals so that each network terminal of the cluster transmits at its turn a testing signal and receiving the testing signals transmitted from the network terminals through the associated splitter.

The fault diagnosis unit 60 also comprises an average power measuring unit not shown and one or several correlating units not shown suited for calculating one or several cross-correlations between a part or the totality of a signal received at the optical line termination 36 and a mimic of the expected pseudorandom sequence encoded within the testing signal.

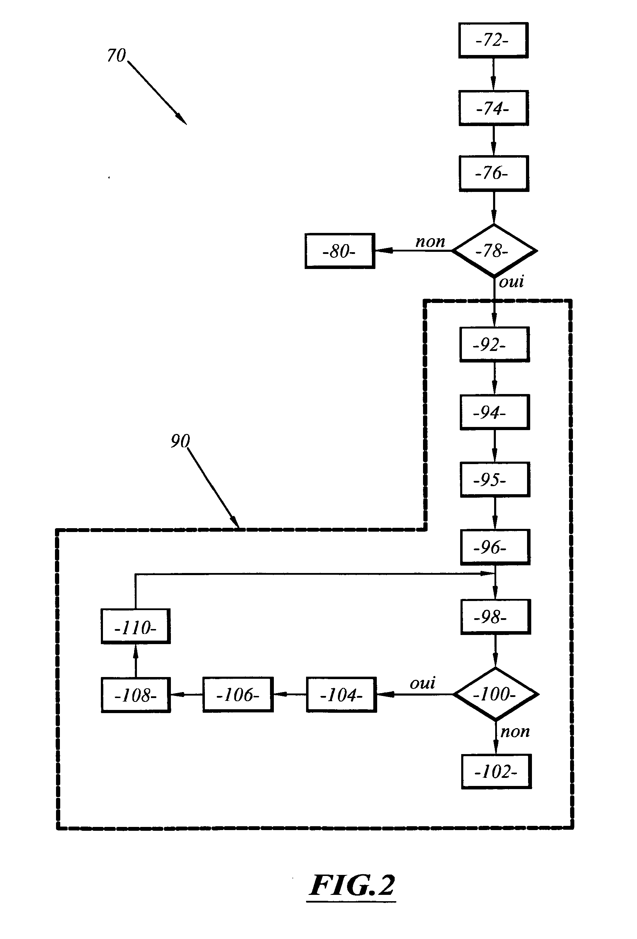

In Figure 2, a first embodiment of the method 70 to diagnose a faulty terminal is illustrated. This method 70 is implemented and operated in the passive optical network described in figure 1.

In a first step 72, each testing signal transmitter 35 as well as the fault diagnosis unit 60 is enabled. During the step 72, mapping tables associated respectively with the splitters are loaded in the memory of the fault diagnosis unit 60. Each mapping table contains the indexing by integer counting numbers of the network terminals connected to one splitter.

Then, in a step 74 the fault diagnosis unit 60 selects the splitter line and the associated splitter on which a fault has been detected, for instance the splitter line 56 and the splitter 46.

Subsequently in a step 76, the fault diagnosis unit 60 send a common request to all the network terminals 20, 22, 24, 26 connected to the splitter 46 to be silent namely not to transmit any signal while remaining powered ON, and attempts to detect an optical signal power from the splitter.

If no optical signal power is sensed at optical line termination by the power measuring unit detector, the fault diagnosis unit 60 decides in a step 78 that the fault diagnosis process can be dealt with a standard process 80.

If power is detected, the fault diagnosis unit 60 executes the process with the set 90 of steps 92, 94, 95, 96, 98, 100, 102, 104, 106, 108 and 110.

The standard process 80 consists of scanning or probing for each splitter each network terminal and gradually increasing one by one the number of network terminals transmitting in their allocated slots according to a predetermined TDMA access scheme until the faulty network terminal is observed.

In the first step 92 of the set 90, while all the network terminals 20, 22, 24, 26 have been requested to be silent, the average power measuring means of the fault diagnosis unit 60 measures over a scaled level range the power of the received signal at optical line termination level and stores in the memory the value of this measured power referred as to the reference average power.

Then in a step 94, a scanning counter of the probed network terminals which outputs a current integer value k, is initialized by inputting 1 in k value (k=1).

The value 1 for k corresponds to the network terminal 20 according to one of the mapping tables defined in step 72.

In the following step 95, a request is sent to the network terminal 20 for transmitting a testing signal.

In the step 96, the network terminal 20 using its testing signal transmitter attempts to transmit the testing signal. It is assumed here that the transmission of the testing signal is correctly carried out.

Then, in a step 98, the average power measuring unit of the fault diagnosis unit 60 power measures the average power of the signal received at the optical line termination.

Since the network terminal 20 is correctly working, the disturbing signal is generated by another network terminal not yet determined among the network terminals 22, 24, 26.

The received signal issued from the splitter 46, which acts as an adder for the network terminal in upstream (from network terminal to OLT), is the superposition of the signal transmitted from the network terminal and the disturbing signal.

The probability that the actual average power of this interference type signal is the same as the average power of the disturbing alone is very low and it can even be expected that the actual average received power will differ from the average power of the disturbing signal referred as to the reference average signal power in the step 92.

Subsequently, in a step 100, the measured average receive power is compared to the reference average power determined in the step 92.

If any change of average power is observed, the process continues to the step 104, otherwise the network terminal mapped to the current counting value k is considered as the faulty terminal.

Here, as network terminal 20 is assumed as working correctly, the process runs to step 104.

In the step 104, the current probed network terminal 20 is requested to be silent and in a step 106, the current scanning counter value k equal to 1 is increased by one and the current value becomes equal to 2, which corresponds to address as the current probed network terminal the network terminal as referred to 22 according the mapping table defined in the step 72.

Then in a step 108, a request is sent to the terminal 22 to transmit a testing signal.

In a step 110, the network terminal 22 attempts to transmit the testing signal.

Here, we will assume that the network terminal 22 is the faulty terminal.

In this case, the received signal received at the optical line termination level consists of the disturbing signal alone, the average power thereof has been measured in the step 92.

It is therefore expected that that measured signal power in the step 98 for the current probed network terminal 22 will be the same as the reference average power measured in the step 92.

In a following step 100, the average power measurement of step 98 and the reference average power measured in the step 92 are compared.

If the comparison does not exhibit any change, which is the case of this example, then it is decided in a step 102 that the network terminal corresponding to the value of k equal to 2, namely the network terminal 22 is the faulty network terminal.

In the case, the network terminal 22 would not have been the faulty network terminal, the process described by steps 104, 106, 108, 110, 98, 100 would have been repeated until the identification of the faulty terminal in the step 102.

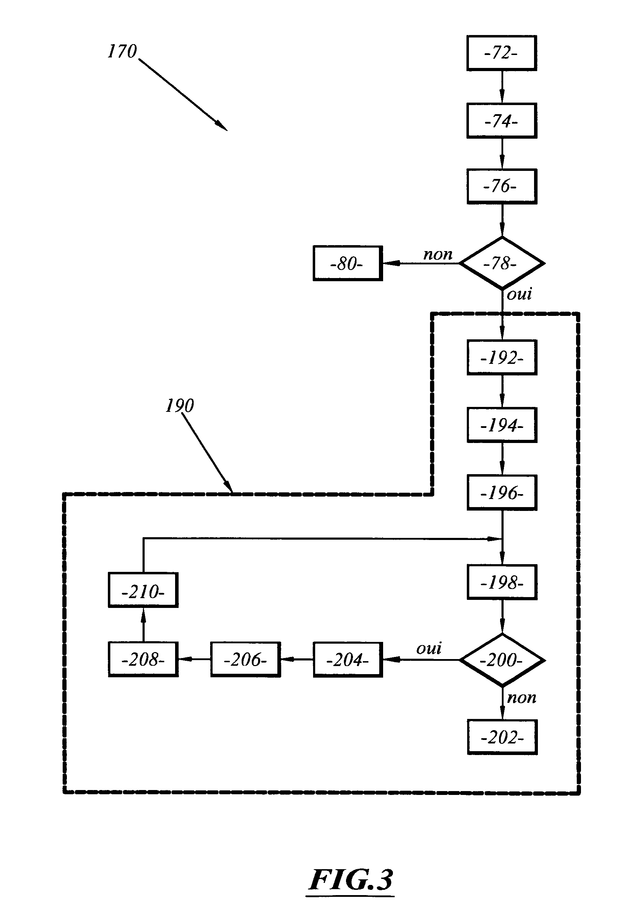

In Figure 3, a second embodiment of the method to diagnose a faulty terminal is illustrated. This method is also implemented and operated in the passive optical network describe in figure 1.

The method 170 comprises at the beginning of the process the same steps 72, 74, 76, 78, 80 as the method 70.

The method 170 differs from the method 70 by replacing the process 90 by a process 190 specific to the second embodiment.

The process 190 is a set of steps 192, 194, 196, 198, 200, 202, 204, 206, 208 and 210.

In the first step 192 of the process 190, a scanning counter of the probed network terminals which outputs a current integer value k, is initialized by inputting 1 in k value (k=1).

The value 1 for k corresponds to the network terminal 20 according one of the mapping tables as defined in step 72.

In the following step 194, a request is sent to the network terminal 20 for transmitting a testing signal.

In the subsequent step 196, the network terminal 20 using its testing signal transmitter 35 attempts to transmit the testing signal.

The used testing signal comprises a pseudorandom sequence that exhibits good properties of autocorrelation as well known CDMA type sequences.

It is assumed here that the transmission of the testing signal is correctly carried out..

Then, in the step 198, one or several correlating units calculate one or several cross correlations between a part or the totality of the signal received at the optical line termination and a mimic of the expected pseudorandom sequence.

Since the network terminal 20 is correctly working, a successful matching and retrieval of the pseudorandom sequence encoded into the testing signal generated from network terminal 20 is achieved.

This successful detection is obtained even in the presence of the disturbing signal which acts as an interferer for the testing signal correctly transmitted.

The well known spread spectrum properties of a pseudorandom sequence with good autocorrelation and cross-correlation properties are advantageously exploited to lower the susceptibility of the testing signal to the disturbing signal acting as a jammer.

Thus, the probability to detect the testing signal in the presence of the disturbing signal is high.

Subsequently, in a step 200, the result of the detection of the testing signal is examined.

If the detection of the testing signal is successful, the processing continues to the step 204, otherwise the network terminal mapped to the current counting value k is considered as the faulty terminal.

Here, as network terminal 20 is assumed as working correctly, the step 204 is carried out.

In the step 204, the current probed network terminal 20 is requested to be silent and in a step 206, the scanning counter value k equal to 1 is increased by one and the current value k becomes equal to 2, which corresponding to address the current probed network terminal as referred to 22 according the mapping table defined in the step 72.

Then in a step 208, a request is sent to the terminal 22 to transmit a testing signal.

In the step 210, the network terminal 22 attempts to transmit the testing signal which is, here, the same testing signal as one used by network terminal 20.

It is assumed here that the transmission of the testing signal is correctly carried out by the network terminal 22.

Then, the steps 198, 200 and 204 are carried out in the same way as for the network terminal 20 with same outputs, namely the testing signal generated from network terminal 22 is successfully detected and the process continues to step 206.

In the step 206, the scanning counter value k equal to 2 is increased by one and the current value becomes equal to 3, which corresponding to address therefore the current probed network terminal as referred to 24 according the mapping table defined in the step 72.

Then in the step 208, a request is sent to the network terminal 24 to transmit a testing signal.

In the step 210, the network terminal 24 attempts to transmit the same testing signal as network terminal 20 and 22 performed.

Here, we will assume that the network terminal 24 is the faulty terminal.

Since the network terminal 24 is not correctly working, matching and retrieval of the pseudorandom sequence encoded into the testing signal generated from network terminal 24 cannot be achieved.

Therefore the result of detection is declared unsuccessful in the step 202 that runs to the step 202 wherein the network terminal 24 is determined as the faulty terminal.

In case the network terminal 24 would not have been the faulty network terminal, the process described by steps 204, 206, 208, 210, 198, 200 would have been repeated until the identification of the faulty terminal in the step 102, here the network terminal 26.

Advantageously, using a pseudorandom sequence encoded into the testing signal provides a higher probability to detect the faulty terminal compared to the first embodiment since the detection sensitivity is increased in case detection is directed towards a network terminal correctly operating.

It also covers more common hardware and software functionalities shared both by the testing signal transmitter 35 and the usual traffic data transmitter of the network terminal.

In a variant of the second embodiment, the steps 78, 80, 204 are removed. With this variant, the diagnosis method is executed while the data traffic service continues, even if the availability of the network may be lower because of the presence of a faulty terminal, since the traffic data that are not affected by the faulty network terminal can continue to flow and the diagnosis will slightly interfere with the normal traffic service.

In a variant of the second embodiment, the pseudorandom sequences used by the network terminals are different. In such a case, the fault diagnosis tasks can be carried out in parallel and the global fault diagnosis process is accelerated.

In a variant if the first embodiment or the second embodiment, a splitter is replaced by a set of cascaded splitters.

For example, a set of cascaded splitters comprises one splitter downwardly connected to four splitters, each splitter having four input lines.

## Claims

1. Method for pinpointing a faulty network terminal in a passive optical network PON comprising an optical line termination (36), a splitter (46) upwardly connected to the optical line termination (36) through a single fibre (56) and at least two network terminals (20, 22), each network terminal (20, 22) upwardly connected to the splitter (46) through a different dedicated fibre, the splitter (46) acting as an adder for superposing any signals transmitted from the network terminals (20, 22),
**characterized in that** the method comprises the following steps consisting of subsequently for each terminal connected to the same splitter (46):
1a.) sending a request (95, 194) from the optical line termination to one identified network terminal (20, 22) for transmitting a testing signal while the remaining network terminals are requested to be silent, and
1b.) attempting (96, 196) from the requested network terminal (20, 22) to transmit the testing signal, and
1c.) analysing (98, 100, 198, 200) the signal received at the optical line termination (36) issued from the splitter (46) in order to detect the testing signal and provide a detection result,
and determining (102, 202) whether the probed identified network terminal is a faulty terminal on the basis of the detection results.

2. Method according to the claim 1, **characterized in that** the determining step (102, 202) is carried out after the analysing step (98, 100, 198, 200) for each terminal, before analysing the signal received from another requested network terminal.

3. Method according to any of the claims 1 to 2, **characterized in that** the testing signal is a signal comprised in the set of the carrier wave signal and the data modulated signal.

4. Method according to any of the claims 1 to 3, **characterized in that** it comprises a first initial step (76) of detecting the presence of a reference signal at the optical line termination when all the network terminals are requested to be silent.

5. Method according to the claim 4, **characterized in that** it comprises a step (92) of measuring the average power of the received signal over a scaled level range in order to obtain a reference average received power after a successful detection of the presence of the reference signal in the first initial step (76).

6. Method according to the claim 5, **characterized in that**
in the step of analysing (98, 100) the signal received at the optical line termination (36), the analysis is carried out by measuring (98) the average of the received power when the requested network terminal (20, 22) transmits the testing signal while the remaining network terminals are requested to be silent,
the measured received power is compared (100) to the reference average received power, and in case a change of the received power is observed the testing signal is considered as being detected,
in the step of determining, the probed network terminal is judged as a faulty terminal when the expected testing signal has not been detected.

7. Method according to any of the claims 1 to 4, **characterized in that** the testing signal is an encoded signal encoded by a pseudorandom data sequence of CDMA type operating as a signature.

8. Method according to claim 7, **characterized in that** the pseudorandom data sequence encoding the testing sequence is the same for all network terminals.

9. Method according to any of the claims 7 to 8, **characterized in that** analysing (198, 200) is achieved by correlating the received signal at the optical line termination (36) with the pseudorandom data sequence of the testing signal.

10. Passive optical network (PON) comprising an optical line termination (36), a splitter (46) upwardly connected the optical line termination (36) through a single fibre and at least two network terminals (20, 22), each network terminal (20, 22) upwardly connected to the splitter (46) through different dedicated fibre, the splitter (46) acting as an adder for superposing any signals transmitted from the network terminals (20, 22),
**characterized in that**
each network terminal (20, 22) comprises a testing signal transmitter (35) able to generate and transmit to the optical line termination (36) a testing signal upon receipt of a request issued from the optical line termination (36),
the optical line termination (36) comprises a fault diagnosis unit (60) for sending a request to one network terminal connected to a same splitter (46) for transmitting a testing signal while the remaining terminals connected to the splitter have been requested to be silent, for analyzing the signal received at the optical line termination issued from the splitter in order to detect the testing signal when the remaining terminals have been required to be silent and provide a detection result, and for determining whether the probed network terminal is a faulty terminal on the basis of the detection result.

11. Passive optical network (PON) according to claim 10, **characterized in that** the testing signal is a signal comprised in the set of the carrier wave signal and the data modulated signal.

12. Passive optical network (PON) according to claim any of claims 10 and 11, **characterized in that**
the fault diagnosis unit (60) comprises an average power detector and a comparator for comparing two different measured average power values.

13. Passive optical network (PON) according to claim any of claims 10 and 12, **characterized in that**
each testing signal transmitter (35) comprises a pseudorandom data sequence encoder for encoding the testing signal,
the analysis diagnosis unit (60) comprises a correlating unit suited for detecting the pseudorandom data sequence.

14. Fault diagnosis unit for pinpointing a faulty network terminal in a passive optical network (PON) **characterized in that** it comprises:
means for sending a request to a probed network terminal for transmitting a testing signal while the remaining terminals connected to a same splitter have been requested to be silent, and
means for analyzing the signal received at an optical line termination issued from the splitter while the remaining terminals have been requested to be silent in order to detect the testing signal and provide a detection result, and
means for determining whether the probed network terminal is a faulty terminal on the basis of the detection result, and
means for managing the tasks of requesting, analyzing and determining.

15. Fault diagnosis unit according to claim 14, **characterized in that**
it comprises an average power detector and a comparator for comparing two different measured average power values.

16. Fault diagnosis unit according to claim 14, **characterized in that** it comprises at least one correlating unit suited for detecting a pseudorandom data sequence.

## Patentansprüche

1. Verfahren zum genauen Lokalisieren eines fehlerhaften Netzendgerätes in einem passiven optischen Netzwerk PON, das einen Abschluss (36) einer optischen Leitung, einen Verteiler (46), der durch eine einzige Faser (56) mit dem Abschluss (36) der optischen Leitung aufwärts verbunden ist, und mindestens zwei Netzendgeräte (20, 22) umfasst, wobei jedes Netzendgerät (20, 22) durch eine andere dedizierte Faser mit dem Verteiler (46) aufwärts verbunden ist, wobei der Verteiler (46) wie ein Addierer zum Überlagern beliebiger Signale wirkt, die von den Netzendgeräten (20, 22) übertragen werden, **dadurch gekennzeichnet, dass** das Verfahren die folgenden Schritte umfasst, die nachfolgend für jedes Endgerät bestehen, das mit dem gleichen Verteiler (46) verbunden ist:
1a.) Senden einer Aufforderung (95, 194) vom Abschluss der optischen Leitung an ein identifiziertes Netzendgerät (20, 22) zum Übertragen eines Testsignals, während die verbleibenden Netzendgeräte aufgefordert werden, sich still zu verhalten, und
1b.) Versuchen (96, 196), das Testsignal vom aufgeforderten Netzendgerät (20, 22) zu übertragen, und
1c.) Analysieren (98, 100, 198, 200) des am Abschluss (36) der optischen Leitung empfangenen Signals, welches vom Verteiler (46) verteilt wurde, um das Testsignal zu detektieren und ein Detektionsergebnis bereitzustellen,
und Ermitteln (102, 202) auf der Basis der Detektionsergebnisse, ob das getestete identifizierte Netzendgerät ein fehlerhaftes Endgerät ist.

2. Verfahren nach Anspruch 1,
**dadurch gekennzeichnet, dass** der Schritt des Ermittelns (102, 202) nach dem Schritt des Analysierens (98, 100, 198, 200) für jedes Endgerät durchgeführt wird, bevor das Signal analysiert wird, das von einem anderen aufgeforderten Netzendgerät empfangen wird.

3. Verfahren nach einem der Ansprüche 1 bis 2,
**dadurch gekennzeichnet, dass** das Testsignal ein Signal ist, das in dem Satz aus dem Trägerwellensignal und dem modulierten Datensignal enthalten ist.

4. Verfahren nach einem der Ansprüche 1 bis 3,
**dadurch gekennzeichnet, dass** es einen ersten Anfangsschritt (76) des Detektierens der Anwesenheit eines Referenzsignals am Abschluss der optischen Leitung umfasst, wenn alle Netzendgeräte aufgefordert wurden, sich still zu verhalten.

5. Verfahren nach Anspruch 4,
**dadurch gekennzeichnet, dass** es einen Schritt (92) des Messens der Durchschnittsleistung des empfangenen Signals über einen skalierten Pegelbereich umfasst, um nach einer erfolgreichen Detektion der Anwesenheit des Referenzsignals im ersten Anfangsschritt (76) eine Referenzdurchschnittsempfangsleistung zu erhalten.

6. Verfahren nach Anspruch 5,
**dadurch gekennzeichnet, dass**
beim Schritt des Analysierens (98, 100) des Signals, das am Abschluss (36) der optischen Leitung empfangen wurde, die Analyse durch das Messen (98) des Durchschnitts der empfangenen Leistung ausgeführt wird, wenn das aufgeforderte Netzendgerät (20, 22) das Testsignal überträgt, während die verbleibenden Netzendgeräte aufgefordert werden, sich still zu verhalten,
die gemessene Empfangsleistung mit der Referenzdurchschnittsempfangsleistung verglichen wird (100) und im Fall, dass eine Veränderung der Empfangsleistung beobachtet wird, das Signal als detektiert betrachtet wird,
beim Schritt des Ermittelns das überprüfte Netzendgerät als ein fehlerhaftes Endgerät beurteilt wird, wenn das erwartete Testsignal nicht detektiert worden ist.

7. Verfahren nach einem der Ansprüche 1 bis 4,
**dadurch gekennzeichnet, dass** das Testsignal ein codiertes Signal ist, das durch eine Pseudozufallsdatensequenz des CDMA-Typs, die als Signatur dient, codiert ist.

8. Verfahren nach Anspruch 7,
**dadurch gekennzeichnet, dass** die Pseudozufallsdatensequenz, welche die Testsequenz codiert, für alle Netzendgeräte die gleiche ist.

9. Verfahren nach einem der Ansprüche 7 bis 8,
**dadurch gekennzeichnet, dass** das Analysieren (198, 200) erreicht wird, indem das am Abschluss (36) der optischen Leitung empfangene Signal mit der Pseudozufallsdatensequenz des Testsignals korreliert wird.

10. Passives optisches Netzwerk (PON), das einen Abschluss (36) einer optischen Leitung, einen Verteiler (46), der mit dem Abschluss (36) der optischen Leitung durch eine einzige Faser aufwärts verbunden ist, und mindestens zwei Netzendgeräte (20, 22) umfasst, wobei jedes Netzendgerät (20, 22) mit dem Verteiler (46) durch eine andere dedizierte Faser aufwärts verbunden ist, wobei der Verteiler (46) als Addierer zum Überlagern beliebiger Signale wirkt, die von den Netzendgeräten (20, 22) übertragen werden,
**dadurch gekennzeichnet, dass**
jedes Netzendgerät (20, 22) einen Testsignalsender (35) umfasst, der auf den Empfang einer Aufforderung hin, die vom Abschluss (36) der optischen Leitung verteilt wurde, zum Erzeugen und Übertragen eines Testsignals an den Abschluss (36) der optischen Leitung in der Lage ist,
wobei der Abschluss (36) der optischen Leitung eine Fehlerdiagnoseeinheit (60) umfasst, um eine Aufforderung an ein Netzendgerät zu senden, das mit einem gleichen Verteiler (46) verbunden ist, um ein Testsignal zu übertragen, während die mit dem Verteiler verbundenen verbleibenden Endgeräte aufgefordert worden sind, sich still zu verhalten, um das von dem Verteiler verteilte am Abschluss der optischen Leitung empfangene Signal zu analysieren, um das Testsignal zu detektieren, wenn die verbleibenden Endgeräte aufgefordert worden sind, sich still zu verhalten, um ein Detektionsergebnis bereitzustellen, und um auf der Basis des Detektionsergebnis zu ermitteln, ob das getestete Netzendgerät ein fehlerhaftes Endgerät ist.

11. Passives optisches Netzwerk (PON) nach Anspruch 10,
**dadurch gekennzeichnet, dass** das Testsignal ein Signal ist, das in dem Satz aus dem Trägerwellensignal und dem modulierten Datensignal enthalten ist.

12. Passives optisches Netzwerk (PON) nach einem der Ansprüche 10 oder 11,
**dadurch gekennzeichnet, dass**
die Fehlerdiagnoseeinheit (60) eine Durchschnittsleistungsdetektionseinrichtung und einen Vergleicher zum Vergleichen von zwei verschiedenen gemessenen Durchschnittsleistungswerten umfasst.

13. Passives optisches Netzwerk (PON) nach einem der Ansprüche 10 und 12,
**dadurch gekennzeichnet, dass**
jeder Testsignalsender (35) einen Pseudozufallsdatensequenzcodierer zum Codieren des Testsignals umfasst,
die Analysediagnoseeinheit (60) eine Korrelationseinheit umfasst, die zum Detektieren der Pseudozufallsdatensequenz geeignet ist.

14. Fehlerdiagnoseeinheit zum genauen Lokalisieren eines fehlerhaften Netzendgerätes in einem passiven optischen Netzwerk (PON), **dadurch gekennzeichnet, dass** sie umfasst:
ein Mittel zum Senden einer Aufforderung an ein getestetes Netzendgerät zum Übertragen eines Testsignals, während die verbleibenden Endgeräte, die mit einem gleichen Verteiler verbunden sind, aufgefordert worden sind, sich still zu verhalten, und
ein Mittel zum Analysieren des Signals, das vom Verteiler verteilt und an einem Abschluss einer optischen Leitung empfangen wurde, während die verbleibenden Endgeräte aufgefordert worden sind, sich still zu verhalten, um das Testsignal zu detektieren und ein Detektionsergebnis bereitzustellen, und
ein Mittel, um auf der Grundlage des Detektionsergebnis zu ermitteln, ob das getestete Netzendgerät ein fehlerhaftes Endgerät ist, und
ein Mittel zur Verwaltung der Aufgaben des Aufforderns, Analysierens und Ermittelns.

15. Fehlerdiagnoseeinheit nach Anspruch 14,
**dadurch gekennzeichnet, dass**
sie eine Durchschnittsleistungsdetektionseinrichtung und einen Vergleicher zum Vergleichen von zwei verschiedenen gemessenen Durchschnittsleistungswerten umfasst.

16. Fehlerdiagnoseeinheit nach Anspruch 14,
**dadurch gekennzeichnet, dass** sie mindestens eine Korrelationseinheit umfasst, die zum Detektieren einer Pseudozufallsdatensequenz geeignet ist.

## Revendications

1. Procédé pour identifier un terminal de réseau défectueux dans un réseau optique passif PON comprenant une terminaison de ligne optique (36), un répartiteur (46) connecté vers le haut à la terminaison de ligne optique (36) par le biais d'une fibre unique (56) et d'au moins deux terminaux de réseau (20, 22), chaque terminal de réseau (20, 22) étant connecté vers le haut au répartiteur (46) par le biais d'une fibre dédiée différente, le répartiteur (46) agissant comme un additionneur pour superposer n'importe quels signaux transmis à partir des terminaux de réseau (20, 22),
**caractérisé en ce que** le procédé comprend les étapes suivantes consistant à, successivement pour chaque terminal connecté au même répartiteur (46) :
1a.) l'envoi d'une demande (95, 194) de la terminaison de ligne optique à un terminal de réseau identifiée (20, 22) pour transmettre un signal de test alors qu'il est demandé aux terminaux de réseau restants d'être silencieux, et
1b.) la tentative (96, 196) de la part du terminal de réseau demandé (20, 22) de transmettre le signal de test, et
1c.) l'analyse (98, 100, 198, 200) du signal reçu au niveau de la terminaison de ligne optique (36) émis à partir du répartiteur (46) de manière à détecter le signal de test et fournir un résultat de détection,
et la détermination (102, 202) du fait que le terminal de réseau identifié testé est un terminal défectueux sur la base des résultats de détection.

2. Procédé selon la revendication 1, **caractérisé en ce que** l'étape de détermination (102, 202) est exécutée après l'étape d'analyse (98, 100, 198, 200) pour chaque terminal, avant l'analyse du signal reçu à partir d'un autre terminal de réseau demandé.

3. Procédé selon l'une quelconque des revendications 1 à 2, **caractérisé en ce que** le signal de test est un signal compris dans un ensemble du signal d'onde porteuse et du signal modulé de données.

4. Procédé selon l'une quelconque des revendications 1 à 3, **caractérisé en ce qu'**il comprend une première étape initiale (76) de détection de la présence d'un signal de référence au niveau de la terminaison de ligne optique quand il est demandé à tous les terminaux de réseau d'être silencieux.

5. Procédé selon la revendication 4, **caractérisé en ce qu'**il comprend une étape (92) de mesure de la puissance moyenne du signal reçu sur une plage de niveau à l'échelle pour obtenir une puissance reçue moyenne de référence après une détection réussie de la présence du signal de référence dans la première étape initiale (76).

6. Procédé selon la revendication 5, **caractérisé en ce que**
dans l'étape d'analyse (98, 100) du signal reçu au niveau de la terminaison de ligne optique (36), l'analyse est exécutée en mesurant (98) la moyenne de la puissance reçue quand le terminal de réseau demandé (20, 22) transmet le signal de test alors qu'il est demandé aux terminaux de réseau restants d'être silencieux,
la puissance reçue mesurée est comparée (100) à la puissance reçue moyenne de référence et, dans le cas où une variation de la puissance reçue serait observée, le signal de test est considéré comme étant détecté,
dans l'étape de détermination, le terminal de réseau testé est jugé comme un terminal défectueux quand le signal de test attendu n'a pas été détecté.

7. Procédé selon l'une quelconque des revendications 1 à 4, **caractérisé en ce que** le signal de test est un signal codé qui est codé par une séquence de données pseudo-aléatoire de type CDMA opérant comme une signature.

8. Procédé selon la revendication 7, **caractérisé en ce que** la séquence de données pseudo-aléatoire codant la séquence de test est la même pour tous les terminaux de réseau.

9. Procédé selon l'une quelconque des revendications 7 à 8, **caractérisé en ce que**
l'analyse (198, 200) est exécutée en corrélant le signal reçu au niveau de la terminaison de ligne optique (36) avec la séquence de données pseudo-aléatoire du signal de test.

10. Réseau optique passif (PON) comprenant une terminaison de ligne optique (36), un répartiteur (46) connecté vers le haut à la terminaison de ligne optique (36) par le biais d'une fibre unique et d'au moins deux terminaux de réseau (20, 22), chaque terminal de réseau (20, 22) étant connecté vers le haut au répartiteur (46) par le biais d'une fibre dédiée différente, le répartiteur (46) agissant comme un additionneur pour superposer n'importe quels signaux transmis à partir des terminaux de réseau (20, 22),
**caractérisé en ce que**
chaque terminal de réseau (20, 22) comprend un dispositif de transmission de signal de test (35) capable de générer et transmettre à la terminaison de ligne optique (36) un signal de test à la réception d'une demande émise à partir de la terminaison de ligne optique (36),
la terminaison de ligne optique (36) comprend une unité de diagnostic de défaut (60) pour envoyer une demande à un terminal de réseau connecté à un même répartiteur (46) pour transmettre un signal de test alors qu'il est demandé aux terminaux restants connectés au répartiteur d'être silencieux, pour analyser le signal reçu au niveau de la terminaison de ligne optique émis à partir du répartiteur de manière à détecter le signal de test quand il a été demandé aux terminaux restants d'être silencieux et fournir un résultat de détection, et pour déterminer le fait que le terminal de réseau testé est un terminal défectueux sur la base des résultats de détection.

11. Réseau optique passif (PON) selon la revendication 10, **caractérisé en ce que** le signal de test est un signal compris dans l'ensemble du signal d'onde porteuse et du signal modulé de données.

12. Réseau optique passif (PON) selon l'une quelconque des revendications 10 et 11, **caractérisé en ce que**
l'unité de diagnostic de défaut (60) comprend un détecteur de puissance moyenne et un comparateur pour comparer deux valeurs différentes de puissance moyenne mesurée.

13. Réseau optique passif (PON) selon l'une quelconque des revendications 11 et 12, **caractérisé en ce que**
chaque dispositif de transmission de signal de test (35) comprend un codeur de séquence de données pseudo-aléatoire pour coder le signal de test,
l'unité de diagnostic d'analyse (60) comprend une unité de corrélation adaptée pour détecter la séquence de données pseudo-aléatoire.

14. Unité de diagnostic de défauts pour identifier un terminal de réseau défectueux dans un réseau optique passif (PON), **caractérisée en ce qu'**elle comprend :
des moyens pour envoyer une demande à un terminal de réseau testé pour transmettre un signal de test alors qu'il est demandé aux terminaux restants connectés à un même répartiteur d'être silencieux, et
des moyens pour analyser le signal reçu au niveau de la terminaison de ligne optique émis à partir du répartiteur alors qu'il est demandé aux terminaux restants d'être silencieux de manière à détecter le signal de test et fournir un résultat de détection, et
des moyens pour déterminer le fait que le terminal de réseau testé est un terminal défectueux sur la base des résultats de détection, et
des moyens pour gérer les tâches de demande, d'analyse et de détermination.

15. Unité de diagnostic de défauts selon la revendication 14, **caractérisée en ce qu'**elle comprend un détecteur de puissance moyenne et un comparateur pour comparer deux valeurs différentes de puissance moyenne mesurée.

16. Unité de diagnostic de défauts selon la revendication 14, **caractérisée en ce qu'**elle comprend au moins une unité de corrélation adaptée pour détecter une séquence de données pseudo-aléatoire.
